# EUROPÄISCHE PATENTSCHRIFT

(11) **EP 2 819 885 B1**
(45) Veröffentlichungstag und Bekanntmachung des Hinweises auf die Patenterteilung: **04.05.2016**
(21) Anmeldenummer: 13707099.1
(22) Anmeldetag: 08.02.2013
(51) Int. Cl.: B60R 11/02

(54) **HALTERAHMEN FÜR SENSORVORRICHTUNGEN IN FAHRZEUGEN**
RETAINING FRAME FOR SENSOR DEVICES IN VEHICLES
CADRE-SUPPORT POUR DES DISPOSITIFS DE DÉTECTION DANS DES VÉHICULES

(30) Priorität: 02.03.2012 DE 102012101781
(43) Veröffentlichungstag der Anmeldung: 07.01.2015
(73) Patentinhaber: Continental Automotive GmbH, 30165 Hannover (DE)
(72) Erfinder: FRENZEL, Henryk, 93059 Regensburg (DE); SAUERER, Vinzenz, 93059 Regensburg (DE); AUGUSTIN, Thomas, 90478 Nürnberg (DE)
(74) Vertreter: Bobbert, Christiana
(86) Internationale Anmeldenummer: PCT/DE2013/100045
(87) Internationale Veröffentlichungsnummer: WO 2013/127388

(56) Entgegenhaltungen:
- WO-A1-97/17230
- DE-A1- 19 538 249
- US-A1- 2009 279 236

## Beschreibung

Die Erfindung betrifft eine Sensorvorrichtung mit einem Halterahmen zur Anordnung im Innenraum eines Fahrzeugs an einer Fahrzeugscheibe und zur Anordnung wenigstens einer Sensorvorrichtung in dem Halterahmen. Die Erfindung betrifft weiterhin eine Sensoranordnung, die im Innenraum eines Fahrzeugs hinter einer Fahrzeugscheibe angeordnet ist und einen erfindungsgemäßen Halterahmen umfasst.
In modernen Fahrzeugen kommen vermehrt Sensorvorrichtungen zum Einsatz, beispielsweise für Fahrerassistenzsysteme. Die Sensorvorrichtungen sind dabei häufig mittels einer Befestigungsvorrichtung hinter der Windschutzscheibe eines Fahrzeugs angeordnet und blicken in Fahrtrichtung durch die Scheibe hindurch. Beispiele für Sensorvorrichtungen sind Radar-, Ultraschall-, Laser- bzw. LIDAR-Sensoren sowie unterschiedlich ausgeführte Fahrzeugkameras, z.B. zur Abstandsmessung und/oder zur Erkennung von Objekten, Hindernissen und Fahrbahnbegrenzungen.
Eine Befestigungsvorrichtung zur Anordnung einer Fahrzeugkamera hinter einer Windschutzscheibe ist beispielsweise aus der DE 10 2010 010 571 A1 bekannt.
Die für die Sensorvorrichtung bisher verwendeten Befestigungsvorrichtungen weisen verschiedene Nachteile auf.
Der Einbau und Ausbau von Sensorvorrichtung in bekannte Befestigungsvorrichtungen erweist sich häufig als eine schwierige Angelegenheit und es sind in der Regel hohe Kräfte erforderlich, insbesondere dann, wenn Einbau- bzw. Lagetoleranzen über elastische Komponenten ausgeglichen werden, wie z.B. über Metall- oder Kunststofffedern. Derartige elastische Komponenten arbeiten zumeist entgegen ihrer eigentlichen Funktion, d.h. entgegen der Befestigungs- bzw. Einbaurichtung der Sensorvorrichtung, insbesondere dann, wenn die elastischen Komponenten die Sensorvorrichtung von der Fahrzeugscheibe wegdrücken.
Bei Befestigungsvorrichtungen, die insbesondere mit einer Kombination von Verrasten bzw. Einrasten und mit elastischer Fixierung arbeiten, insbesondere mit elastischen Kunststoffkomponenten wie z.B. Kunstofffedern, treten nachteilige Erscheinungen, wie z.B. Fließen und/oder Nachgeben, der elastischen Kunststoffkomponenten über Temperatur- und Zeitverlauf auf. Dies führt insbesondere zu einem Lockern der Sensorvorrichtung in der Befestigungsvorrichtung über deren Lebensdauer im Fahrzeug.

Die Druckschrift DE 195 38 249 A1 offenbart eine Halterungsvorrichtung für ein Funktelefon in einem Fahrzeug, bestehend aus einem Adapterelement, das zur Aufnahme des Funktelefons dient, und einem Basiselement, das in dem Fahrzeug lösbar befestigbar ist. Das Adapterelement ist in das Basiselement einhängbar und mittels Einrichtungen am Basiselement verriegelbar.

Aus der Druckschrift WO 97/17230 A1 ist eine Haltevorrichtung für das Tragen eines Objekts wie ein Mobiltelefon in einem Fahrzeug bekannt, mit einer Befestigungsplatte, welche an ihren oberen und unteren Kanten Beine aufweist, wobei die Endbereiche der Beine angepasst sind die Haltevorrichtung an ein Fahrzeugarmaturenbrett anzubringen, mit einer schlitzartigen Öffnung, die ausgebildet ist, einen Aufhängungsclip auf dem Objekt aufzunehmen.

Die Druckschrift US 2009/279236 beschreibt ein elektrisches Gerät, insbesondere ein Navigationssystem, mit einem Grundkörper und einem bewegbaren Körper, wobei der bewegbare Körper zwischen einem eingeschlossenen und entfalteten Zustand verschiebbar ist, mit einem Pressteil, welches den Grundkörper bei dem eingeschlossenen Zustand des bewegbaren Körpers gegen Führungsschienen drückt.

Der Erfindung liegt die Aufgabe zugrunde, eine Lösung anzugeben, die eine möglichst einfache, kostengünstige und langzeitstabile Befestigung einer Sensorvorrichtung hinter einer Fahrzeugscheibe ermöglicht.

Diese Aufgabe wird durch eine Vorrichtung bzw. durch einen Halterahmen mit den Merkmalen nach Anspruch 1 und durch eine Sensoranordnung mit den Merkmalen nach Anspruch 8 gelöst. Vorteilhafte Ausgestaltungen und Weiterbildungen sind Gegenstand von Unteransprüchen, wobei auch Kombinationen und Weiterbildungen einzelner Merkmale miteinander denkbar sind. Ein wesentlicher Gedanke der Erfindung besteht darin, eine Befestigungsvorrichtung, die zur Anordnung einer Sensorvorrichtung hinter einer Fahrzeugscheibe dient, in Form eines Halterahmens auszugestalten. Der Halterahmen umfasst dabei Führungsbahnen, die an einer Seite bzw. an einem Ende des Rahmens ausgebildet sind. Die Führungsbahnen sind bevorzugt derart ausgestaltet, dass eine Sensorvorrichtung, die Halteelemente umfasst, welche vorzugsweise passend, d.h. zur Führung in den Führungsbahnen geeignet, ausgebildet sind, in einer durch die jeweilige Ausgestaltung der Führungsbahnen vorgegebenen Bahn an die Fahrzeugscheibe herangeführt werden kann. Über geeignete Einrichtungen die vorzugsweise an einer gegenüberliegenden Seite bzw. einem gegenüberliegenden Ende des Rahmens und/oder an einer entsprechenden Seite der Sensorvorrichtung ausgebildet sind, kann eine geeignete mechanische Kraft in Führungsrichtung der Führungsbahnen erzeugt werden, durch welche eine Führung der Sensorvorrichtung bzw. der Halteelemente der Sensorvorrichtung bei deren Anordnung im Halterahmen in den Führungsbahnen erzwungen wird. Die Fixierung der Sensorvorrichtung im Halterahmen erfolgt vorzugsweise mittels zusätzlicher elastischer bzw. federnder Einrichtungen. Ein wesentlicher Vorteil der Erfindung ist dabei die Tatsache, dass nur eine geringe Kraft zur Fixierung der Sensorvorrichtung im Halterahmen erforderlich ist bzw. die Fixierung mittels elastischer bzw. federnder Komponenten im Wesentlichen kraftlos realisiert werden kann. Aufgrund der Realisierung mit geringen Kräften werden Nachteile, wie Fließen, Nachgeben und/oder Lockern über Temperatur und Zeit, vermieden.

Die erfindungsgemäße Sensorvorrichtung kann im Innenraum eines Fahrzeugs angeordnet sein, insbesondere an einer Fahrzeugscheibe, und dient bevorzugt zur Anordnung bzw. Aufnahme wenigstens einer Sensorvorrichtung, insbesondere mit Blickrichtung der Sensorvorrichtung durch den Halterahmen und durch die Fahrzeugscheibe hindurch. Der Halterahmen kann auch Bestandteil einer aus weiteren Komponenten bestehenden Befestigungsvorrichtung, insbesondere für weitere fahrzeugseitige Einrichtungen sein, wie beispielsweise Rückspiegel, Anzeigeinstrumente. Der Halterahmen kann somit auch Bestandteil einer größeren Befestigungsvorrichtung für mehrere elektronische Komponenten, insbesondere für verschiedene Sensorvorrichtungen, sein. Derartige Befestigungsvorrichtungen werden auch als Brackets bezeichnet. Die Grundform des erfindungsgemäßen Halterahmens kann an sich beliebig sein. Besonders zweckmäßig ist eine Ausführungsform mit einer polygonalen, insbesondere quadratischen oder rechteckigen, Grundform umfassend wenigstens vier sich geradlinig erstreckenden Rahmenseiten. Der Halterahmen kann z.B. über eine Klebeverbindung direkt an der Fahrzeugscheibe angeordnet sein. Insbesondere aufgrund der Ausgestaltung in Form eines Rahmens, kann die Sensorvorrichtung mit Blickrichtung durch den Halterahmen sowie durch die Fahrzeugscheibe hindurch in dem Halterahmen angeordnet werden. Bei der Fahrzeugscheibe handelt es sich vorzugsweise um die Windschutzscheibe oder die Heckscheibe des Fahrzeugs, so dass die im Halterahmen angeordnete Sensorvorrichtung beispielsweise zur Erfassung eines vorausliegenden oder rückwärtigen Umgebungsbereichs des Fahrzeugs, insbesondere des Verkehrsraums, dienen kann. Bei der Sensorvorrichtung, die in dem erfindungsgemäßen Halterahmen angeordnet sein kann, handelt es sich bevorzugt um eine Fahrzeugkamera. Es können auch mehrere und/oder andere Sensorvorrichtungen in dem Halterahmen angeordnet sein, beispielsweise Ultraschall-, Radar- oder Lidarsensoren und/oder z.B. ein Regensensor zur Erkennung von Regen auf der Oberfläche der Fahrzeugscheibe.
Der Halterahmen ist erfindungsgemäß im Bereich wenigstens einer Seite bzw. an wenigstens einem Ende mit Führungsbahnen ausgestaltet, vorzugsweise an einem vorderen Ende. Die Führungsbahnen dienen dabei zur Aufnahme von Halteelementen, die vorzugsweise an einer entsprechenden Seite bzw. an einem entsprechenden Ende der Sensorvorrichtung, welche in dem Halterahmen angeordnet sein kann, ausgebildet sind. Die Führungsbahnen sind dabei vorzugsweise derart ausgestaltet, dass die Halteelemente der Sensorvorrichtung, bei Anordnung der Sensorvorrichtung im Halterahmen, derart in den Führungsbahnen geführt werden, dass die Sensorvorrichtung an die Fahrzeugscheibe herangeführt wird.
Der erfindungsgemäße Halterahmen umfasst weiterhin im Bereich wenigstens einer den Führungsbahnen gegenüberliegenden Seite bzw. am den Führungsbahnen gegenüberliegenden Ende geeignete Einrichtungen, zur Erzeugung einer mechanischen Kraft, insbesondere eine Spann- bzw. Federkraft, die bei Anordnung der Sensorvorrichtung im Halterahmen im Wesentlichen in Richtung einer Führungsrichtung der Führungsbahnen wirkt, so dass die Einrichtungen, bei Anordnung der Sensorvorrichtung im Halterahmen, eine Führung der Halteelemente der Sensorvorrichtung in den Führungsbahnen bewirken bzw. erzwingen. Die Einrichtungen sind bevorzugt an einem hinteren Ende des Halterahmens ausgebildet.
Mit im Wesentlichen in Richtung der Führungsrichtung ist dabei insbesondere eine solche Wirkrichtung, der durch die Einrichtungen erzeugten Kraft, gemeint, wobei die Wirkrichtung sich weniger als 90° von der Führungsrichtung der Führungsbahnen bzw. der gemittelten Führungsrichtung der Führungsbahnen unterscheidet, vorzugsweise derart, dass durch die von den Einrichtungen erzeugte Kraft eine Führung der Halteelemente der Sensorvorrichtung in den Führungsbahnen bewirkt wird. Mit Führungsrichtung ist insbesondere die Richtung gemeint, in der die Halteelemente der Sensorvorrichtung in den Führungsbahnen geführt werden bzw. in der die Sensorvorrichtung bei Anordnung im Halterahmen an die Fahrzeugscheibe herangeführt wird.

In einer bevorzugten Ausgestaltung des erfindungsgemäßen Halterahmens sind die Einrichtungen zur Erzeugung der mechanischen Kraft in Form von starren und/oder flexiblen (bzw. elastischen) Führungsschrägen ausgebildet. Die Führungsschrägen sind dabei vorzugweise mit schrägen Ebenen ausgebildet, an denen eine Sensorvorrichtung bei Anordnung im Halterahmen derart geführt wird, dass eine Bewegung der Sensorvorrichtung in Richtung der Führungsrichtungen der Führungsbahnen erzwungen wird, sowie eine Führung der Halteelemente der Sensorvorrichtung innerhalb der Führungsbahnen.

In einer vorteilhaften Ausgestaltung des erfindungsgemäßen Halterahmens, ist der Halterahmen mit zusätzlichen Einrichtungen ausgebildet, zur mechanischen Fixierung der Sensorvorrichtung im Halterahmen. Bei den zusätzlichen Einrichtungen kann es sich beispielsweise um Federelemente handeln, die die Sensorvorrichtung insbesondere bei Erreichen einer Endposition, beispielsweise mittels Verschnappen bzw. Einrasten, im Halterahmen fixieren. Die Fixierung über die zusätzlichen Einrichtungen dient dabei vorzugsweise zur Sicherung der Sensorvorrichtungen gegen ein Herausfallen aus dem Halterahmen, insbesondere zur Sicherung der Position der Sensorvorrichtung in Richtung senkrecht zur Führungsrichtung der Führungsbahnen. Da die Sicherung insbesondere senkrecht zur Führungsrichtung erfolgt und kann diese im Wesentlichen kraftlos bzw. mit geringen Kräften erfolgen.

In einer besonderen Ausgestaltung des erfindungsgemäßen Halterahmens, sind die Führungsbahnen mit einem im Wesentlichen S-förmigen Profil ausgestaltet. Ein wesentlicher Vorteil einer derartigen Ausgestaltung ist die Tatsache, dass eine Sensorvorrichtung bei Anordnung im erfindungsgemäßen Halterahmen über Halteelemente in einem definierten S-förmigen Bogen an die Fahrzeugscheibe herangeführt werden kann.

In einer bevorzugten Ausführung des erfindungsgemäßen Halterahmens, sind die Führungsbahnen im Bereich einer Endposition der Halteelemente bzw. in einer Endposition der Sensorvorrichtung im Halterahmen im Wesentlichen parallel zur Fahrzeugscheibe ausgerichtet.

Die erfindungsgemäße Sensoranordnung ist bevorzugt im Innenraum eines Fahrzeugs hinter einer Fahrzeugscheibe angeordnet, insbesondere hinter der Windschutzscheibe, und umfasst einen Halterahmen, der nach einer der vorangehend beschriebenen Ausführungen ausgebildet ist. Die erfindungsgemäße Sensoranordnung umfasst weiterhin wenigstens eine Sensorvorrichtung, die in dem Halterahmen angeordnet ist. Die Sensorvorrichtung ist vorzugsweise auf einer Seite, welche insbesondere der Seite bzw. dem Ende des Halterahmens entspricht, an dem die Führungsbahnen ausgebildet sind, mit Halteelementen ausgestaltet, die bei Anordnung der Sensorvorrichtung im Halterahmen zur Führung der Sensorvorrichtung in Führungsbahnen des Halterahmens sowie bei Erreichen einer gewünschten Endposition zur Fixierung der Sensorvorrichtung im Halterahmen dienen.

In einer bevorzugten Ausgestaltung der erfindungsgemäßen Sensoranordnung ist die Sensorvorrichtung an einer Seite, welche der den Führungsbahnen gegenüberliegenden Seite bzw. Ende des Halterahmens entspricht bzw. dieser zugewandt ist, mit Einrichtungen ausgestaltet ist, die zur Erzeugung einer mechanischen Kraft dienen, die, insbesondere bei Anordnung der Sensorvorrichtung im Halterahmen, im Wesentlichen in Richtung der Führungsrichtung der Führungsbahnen auf die Sensorvorrichtung wirkt. Die Einrichtungen können weiterhin zur Fixierung der Sensorvorrichtung ausgestaltet sein, beispielsweise durch Verschnappen bei Erreichen einer Endposition der Sensorvorrichtung im Halterahmen.

In einer besonderen Ausführung der erfindungsgemäßen Sensoranordnung handelt es sich bei der Sensorvorrichtung um eine Fahrzeugkamera, insbesondere mit Blickrichtung bzw. Erfassungsrichtung durch den Halterahmen hindurch.

In einer vorteilhaften Ausführung der Sensoranordnung handelt es sich bei den Halteelementen, die an der Sensorvorrichtung ausgebildet sind, um zylinderförmige Bolzen. Die zylinderförmigen können jeweils mit wenigstens einer Schabenase ausgestaltet sein, insbesondere um einen Toleranzausgleich bei Führung der Sensorvorrichtung in den Führungsbahnen des Halterahmens zu erreichen. Die Schabenasen sind dabei vorzugsweise derart auf den Halteelementen ausgebildet, dass die Schabenasen, bei Anordnung bzw. bei Führung der Halteelemente in den Führungsbahnen, der Fahrzeugscheibe zugewandt sind, beispielsweise um den Abstand der Sensorvorrichtung zur Scheibe konstant zu halten. Die Halteelemente müssen nicht zylinderförmig ausgebildet sein, sondern können auch eine andere Form aufweisen, wobei die Halteelemente bevorzugt mit einer Form ausgestaltet sind, passend zur Größe bzw. Ausgestaltung der Führungsbahnen des Führungsrahmen.

Weitere Vorteile sowie optionale Ausgestaltungen des erfindungsgemäßen Halterahmens sowie der erfindungsgemäßen Sensoranordnung gehen aus der nachfolgenden Beschreibung und den Zeichnungen hervor. Ausführungsbeispiele sind in den Zeichnungen vereinfacht dargestellt und in der nachfolgenden Beschreibung näher erläutert.

Es zeigen
- Figur 1:: ein erstes Beispiel für einen erfindungsgemäßen Halterahmen.
- Figuren 2a und 2b:: ein zweites Beispiel für einen erfindungsgemäßen Halterahmen.
- Figur 3:: eine Darstellung des Funktionsprinzips des erfindungsgemäßen Halterahmens.
- Figuren 4a bis 4d:: ein Beispiel für eine erfindungsgemäße Sensoranordnung.
- Figuren 5a bis 5d:: Detaildarstellungen eines erfindungsgemäßen Halterahmen bzw. einer erfindungsgemäßen Sensoranordnung.

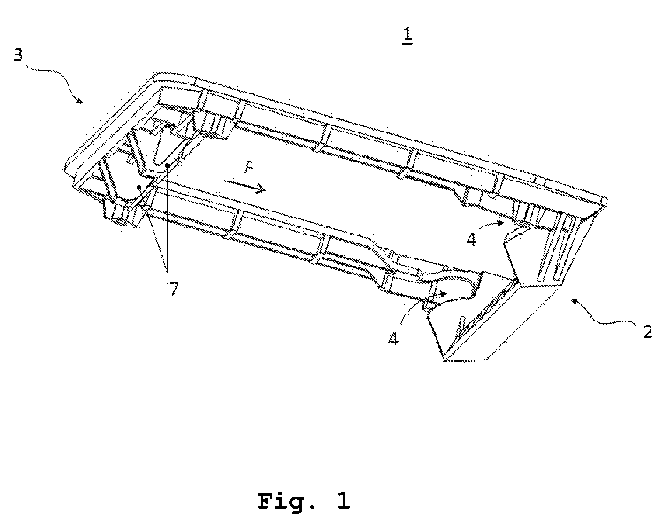

In Fig. 1 ist ein Beispiel für einen erfindungsgemäßen Halterahmen 1 dargestellt. Der Halterahmen 1 weist eine im Allgemeinen rechteckige Form auf mit vier ein Rahmenprofil bildenden Seiten, wobei jeweils zwei Rahmenseiten einander parallel gegenüberliegen. An einem vorderen Ende bzw. an einer vorderen Seite 2 des Halterahmens 1, die einer hinteren Seite 3 bzw. einem hinteren Ende gegenüberliegt, sind zwei Führungsbahnen 4 ausgestaltet. Die Führungsbahnen 4 dienen zur Aufnahme von Halteelementen 10, die an einer Sensorvorrichtung 8 angeordnet sind, die erfindungsgemäß in dem Halterahmen 1 angeordnet werden kann. An der den Führungsbahnen 4 gegenüberliegenden Seite 3 des Halterahmens sind weiterhin Einrichtungen ausgebildet, zur Erzeugung einer Kraft F auf eine Sensorvorrichtung 8, insbesondere bei Anordnung der Sensorvorrichtung 8 im Halterahmen 1, durch die eine Führung von Halteelementen 10, die erfindungsgemäß an der Sensorvorrichtung 8 ausgebildet sein können, in den Führungsbahnen 4 erzwungen wird. Bei den Einrichtungen handelt es sich in diesem Fall um Führungsschrägen 7.

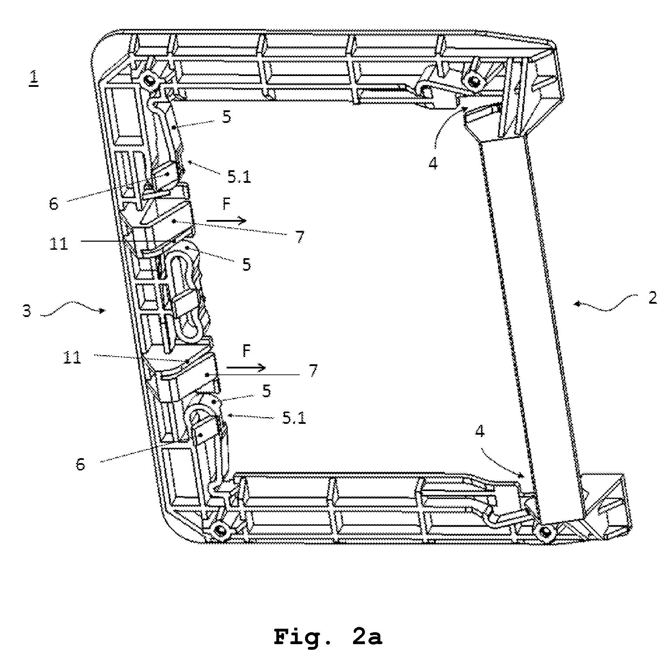

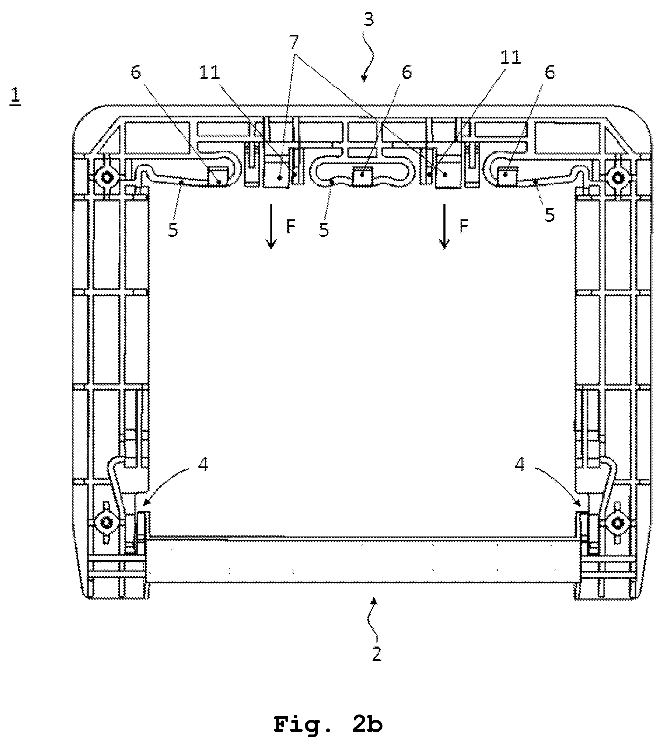

Die Figuren 2a und 2b zeigen ein weiteres Beispiel für einen erfindungsgemäßen Halterahmen 1 jeweils aus einer anderen Perspektive. Der Halterahmen 1 umfasst Führungsbahnen 4, die an einer vorderen Seite 2 des Halterahmens 1 ausgebildet sind. Der Halterahmen 1 umfasst weiterhin Einrichtungen, die an der den Führungsbahnen 4 gegenüberliegenden Seite 3 bzw. der hinteren Seite 3, des Halterahmens 1 ausgebildet sind.
Bei den Einrichtungen handelt es zum Einen um Federelemente 5, welche derart ausgebildet sind, dass diese über Verschnappen eine Sensorvorrichtung 8 im Halterahmen 1 fixieren können bzw. deren Position, insbesondere senkrecht zur Führungsrichtung der Führungsbahnen 4, sichern. Die Federelemente 5 sind dazu teilweise mit Aussparungen 5.1 ausgebildet, in die passende Elemente 17, z.B. Flachfedern, die an der Sensorvorrichtung 8 ausgebildet sein können, einrasten bzw. einschnappen können. Die Federelemente 5 sind darüber hinaus mit Entrastelementen 6 ausgebildet, durch die ein manuelles Lösen des Sensorvorrichtung 8 bzw. der Fixierung der Sensorvorrichtung 8 über die Federelemente 5 im Halterahmen 1 möglich ist. Als weitere Einrichtungen sind an der den Führungsbahnen 4 gegenüberliegenden Seite 3 des Halterahmens 1 schräge Führungsbahnen 7 und starre Führungselemente 11 angeordnet, die eine Kraft F in Führungsrichtung der Führungsbahnen 4 auf die Sensorvorrichtung 8 bei deren Anordnung im Halterahmen 1 erzeugen, und damit eine Führung der Sensorvorrichtung 8 bzw. deren Halteelemente 10 in den Führungsbahnen 4 bewirken. Die starren Führungselemente 11 dienen insbesondere zur seitlichen Führung bzw. zur seitlichen Zentrierung einer Sensorvorrichtung 8 bei Anordnung im Halterahmen 1.

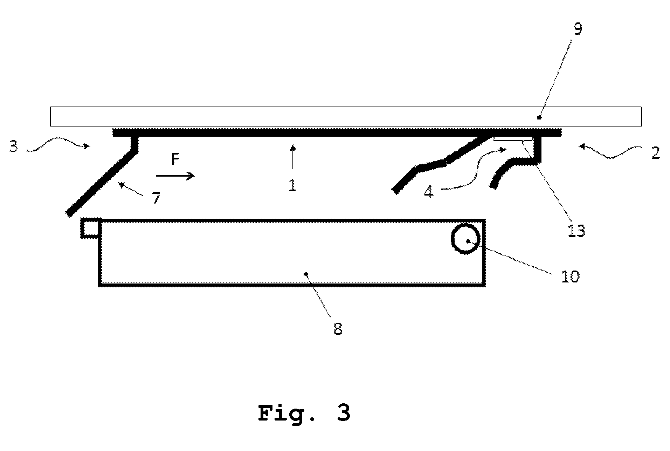

Fig. 3 ist eine Prinzipdarstellung des erfindungsgemäßen Halterahmens 1, insbesondere zur Darstellung des Funktionsprinzips bei der Anordnung einer Sensorvorrichtung 8 in dem Halterahmen 1. Entsprechend Fig. 3 ist der Halterahmen 1 an einer Fahrzeugscheibe 9 angeordnet, beispielsweise an der Windschutzscheibe eines Fahrzeugs. An der vorderen Seite 2 des Halterahmens 1 sind erfindungsgemäß Führungsbahnen 4 ausgestaltet. An der den Führungsbahnen 4 gegenüberliegenden Seite 3 des Halterahmens 1 sind Einrichtungen 7 ausgestaltet, die eine Kraft F zur Führung von Halteelementen 10 der Sensorvorrichtung 8 in den Führungsbahnen 4, insbesondere bei Anordnung der Sensorvorrichtung 8 im Halterahmen, erzwingen. Bei Anordnung einer Sensorvorrichtung 8 wird somit über die Einrichtungen 7 eine Führung der Halteelemente 10 in den Führungsbahnen 4 bewirkt, derart, dass die Sensorvorrichtung 8 entlang der Führungsrichtung der Führungsbahnen 4 an die Fahrzeugscheibe 9 herangeführt wird. Die Führungsbahnen 4 sind im Beispiel aus Fig. 3 mit einem S-förmigen Profil ausgebildet sowie in einem Bereich 13, der einer Endposition der Sensorvorrichtung 8 bzw. deren Halteelemente 10 entspricht, mit einer zur Fahrzeugescheibe 9 parallelen Ausrichtung. Die an der Sensorvorrichtung 8 ausgebildeten Halteelemente 10 sind in diesem Fall als zylinderförmige Bolzen dargestellt. Durch die parallele Ausgestaltung der Führungsbahnen 4 in der Endposition 13 und bei einer zylindrischen Ausgestaltung der Halteelemente 10 der Sensorvorrichtung 8 wird eine besonderes einfache und relativ kraftlose Fixierung der Sensorvorrichtung 8 im Halterahmen 1 erreicht. Die Einrichtungen 7, die an der den Führungsbahnen 4 gegenüberliegenden Seite 3 des Halterahmens 1 ausgebildet sind, müssen dabei nur eine geringe Kraft F erzeugen, um eine Führung der Halteelemente 10 in den Führungsbahnen 4 zu bewirken. Über zusätzliche Einrichtungen 5, mit einem Verschnapp- bzw. Einrastmechanismus an der den Führungsbahnen 4 gegenüberliegenden Seite 3 des Halterahmens 1, kann zudem eine langzeitstabile Positionierung der Sensorvorrichtung 8 erreicht werden, die vorteilhafterweise im Wesentlichen kraftlos erfolgen kann, da bevorzugt lediglich eine Sicherung gegen ein Herausfallen der Sensorvorrichtung 8 aus dem Halterahmen 1 erforderlich ist. Hierdurch treten bei der Sicherung bzw. Fixierung einer Sensorvorrichtung keine nachteiligen Erscheinungen auf, wie beispielsweise Fließen, und damit kein Lösen der Sensorvorrichtung über die Zeit.

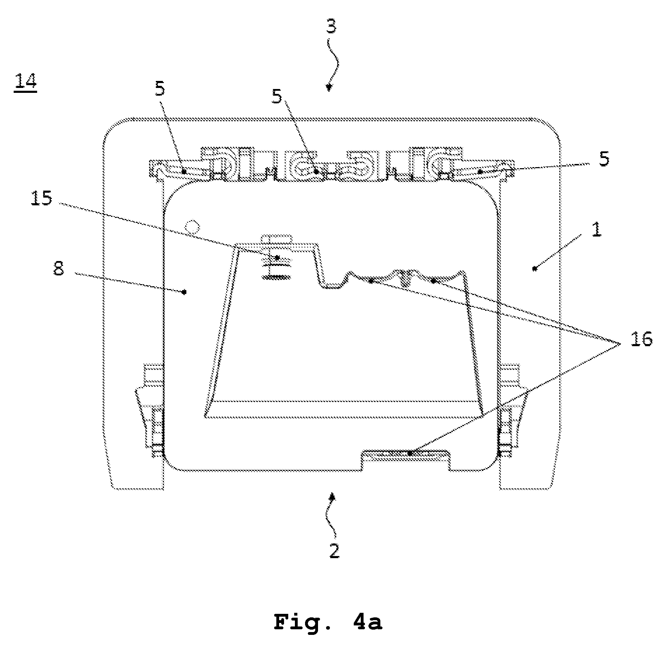

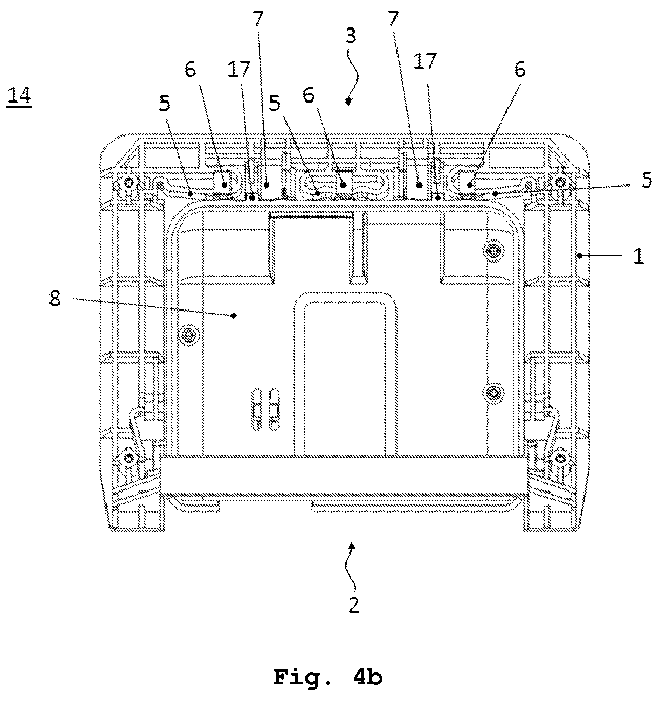

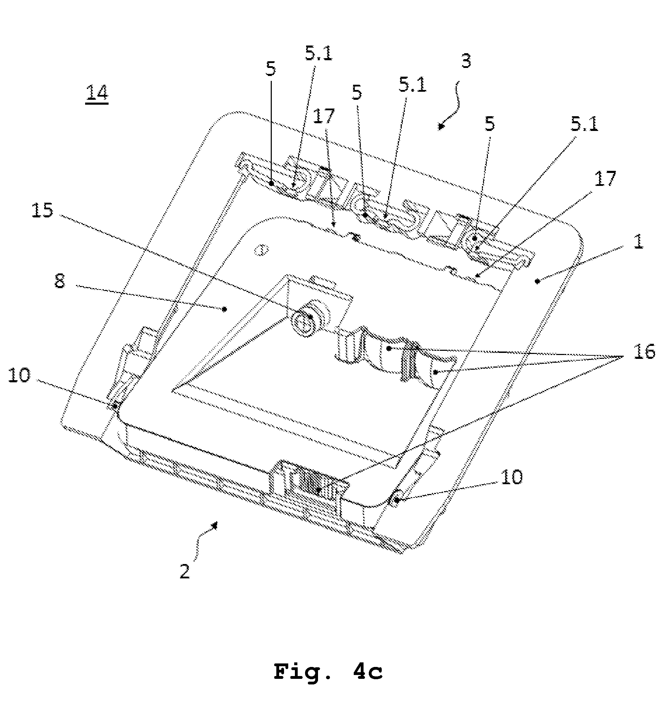

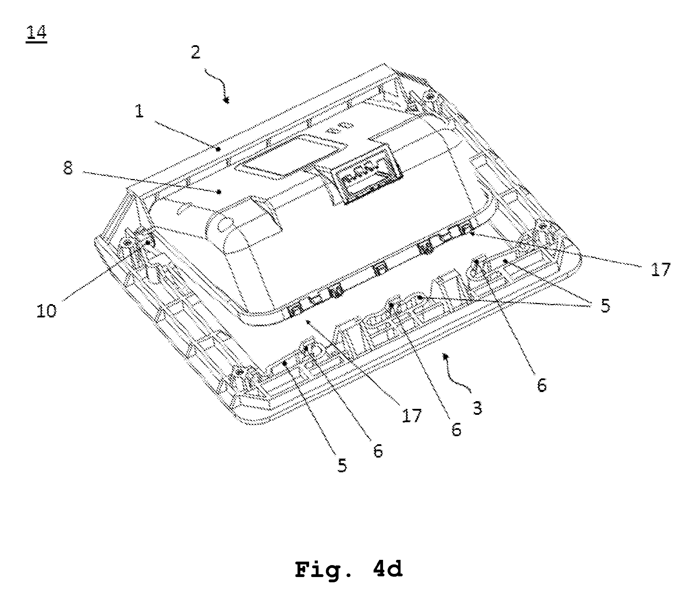

Die Fig. 4a bis d zeigen ein Beispiel für eine erfindungsgemäße Sensoranordnung 14 jeweils aus einer anderen Perspektive. Die Sensoranordnung 14 kann beispielsweise im Innenraum eines Fahrzeugs hinter einer Fahrzeugscheibe 9 angeordnet sein und umfasst einen Halterahmen 1 und eine Sensorvorrichtung 8. Bei der Sensorvorrichtung 8 handelt es sich in diesem Fall um eine Kombination einer Fahrzeugkamera 15 und eines LIDAR-Sensors 16 (Light Detection And Ranging). Die Sensorvorrichtung 8 umfasst Halteelemente 10, die in Führungsbahnen 4 des Halterahmens 1 angeordnet sind. Der Halterahmen 1 entspricht in diesem Fall dem erfindungsgemäßen Halterahmen 1 aus den Figuren 2a und 2b. Die Führungsbahnen 4 des Halterahmens 1 sind derart ausgestaltet, dass die Sensorvorrichtung 8 bei Anordnung im Halterahmen 1 über die Halteelemente 10 in den Führungsbahnen 4 in einer definierten Bahn an die Fahrzeugscheibe 9 herangeführt wird. Die Sensoranordnung 14 ist im dargestellten Ausführungsbeispiel auf der den Führungsbahnen 4 gegenüberliegenden Seite 3 mit einem Verrastmechanismus ausgebildet, in diesem Fall mit Anschlägen 17 an der Sensorvorrichtung 8 und Aussparungen 5.1 an den Federelementen 5 des Halterahmens 1, die bei Erreichen einer Endposition der Halteelemente 10 in den Führungsbahnen 4 und insbesondere bei Andrücken des hinteren Teiles der Sensorvorrichtung 8 in den Halterahmen 1 ineinandergreifen bzw. miteinander verschnappen.

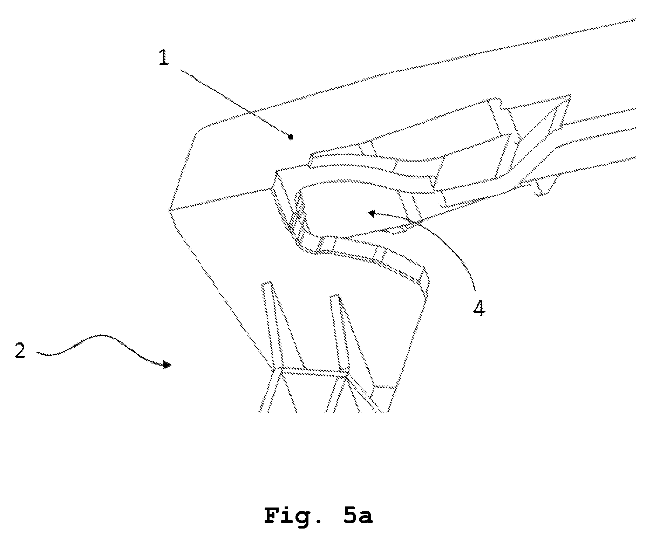

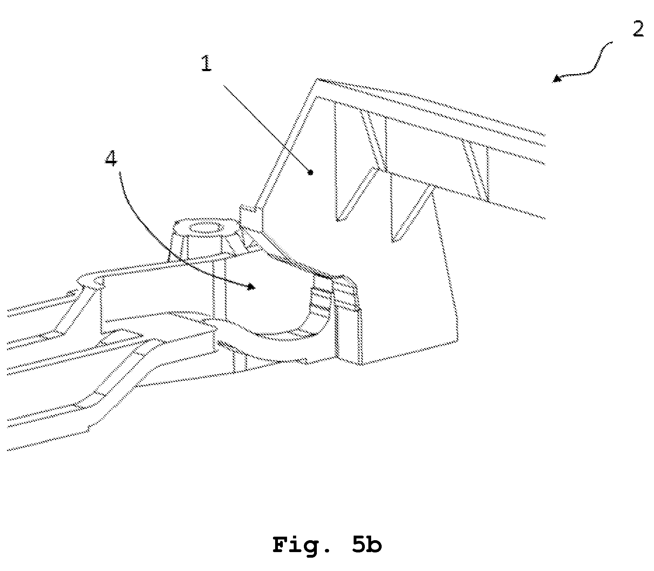

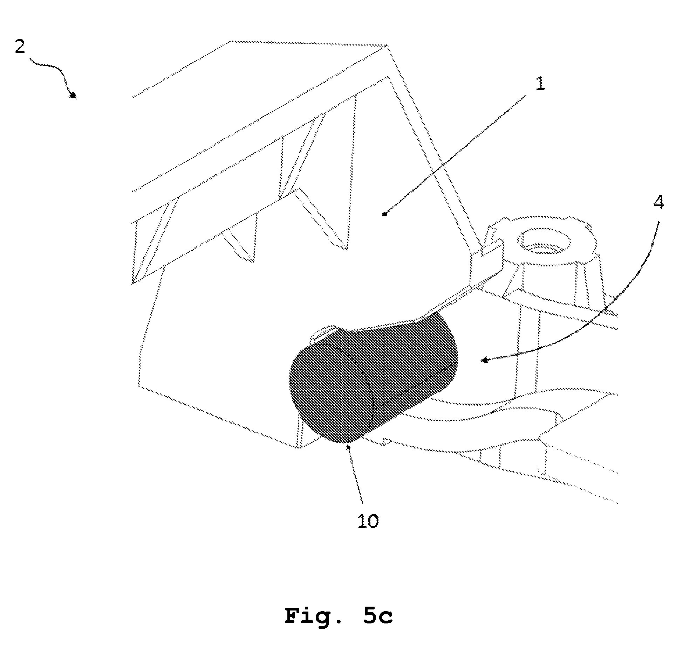

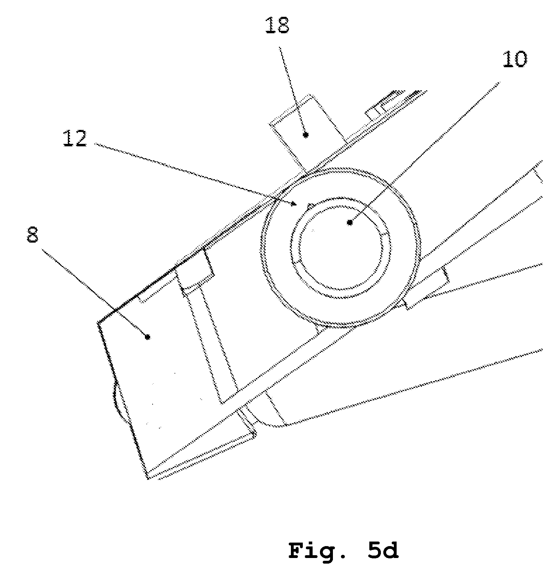

Die Figuren 5a bis 5d zeigen Detaildarstellungen verschiedener Elemente des erfindungsgemäßen Halterahmens 1 bzw. der erfindungsgemäßen Sensoranordnung 14. Die Figuren 5a und 5b sind jeweils Detaildarstellungen des vorderen Bereichs 2 des erfindungsgemäßen Halterahmens 1 und zeigen eine bevorzugte Ausgestaltung der Führungsbahnen 4. Fig. 5c zeigt ein Halteelement 10 einer Sensorvorrichtung 8 in einer Führungsbahn 4 eines erfindungsgemäßen Halterahmens 1. Fig. 5d zeigt eine Detailansicht eines vorderen Bereichs einer Sensorvorrichtung 8 sowie ein an der Sensorvorrichtung 8 ausgebildetes Halteelement 10. Das Halteelement 10 ist in diesem Fall mit einer Schabenase 12 ausgestaltet. Die Schabenase 12 dient dabei zum Toleranzausgleich und ist auf der Oberseite des Halteelements 10 angeordnet, d.h. auf der bei Anordnung der Sensorvorrichtung im Halterahmen 1 der Fahrzeugscheibe 9 zugewandten Seite, so dass das Halteelement 10 bei Anordnung der Sensorvorrichtung 8 im Halterahmen 1 durch die Schabenase 12 nach unten (bzw. von der Scheibe 9 weg) gedrückt wird und wodurch der Abstand der Sensorvorrichtung 8 zur Fahrzeugscheibe 9 konstant gehalten wird. An Sensorvorrichtung 8 aus Fig. 5d ist auf der der Fahrzeugscheibe 9 zugewandten Seite ein elastisches Element 18 angeordnet. Das elastische Element 18, bei dem es sich beispielsweise um Moosgummi handeln kann, befindet sich bei Anordnung der Sensorvorrichtung 8 im Halterahmen 1 direkt zwischen Scheibe 9 und Sensorvorrichtung 8 und kann dabei als Schutz vor Geräuschentwicklungen, beispielsweise aufgrund von Vibrationen, und/oder zum Trennen der vom LIDAR-Sensor 16 ausgesendeten Lichtstrahlen von den empfangenen Lichtstrahlen.

### Bezeichnungsliste

- 1.: Halterahmen
- 2.: vordere Seite bzw. vorderes Ende des Halterahmens (Seite mit Führungsbahnen)
- 3.: hintere Seite bzw. hinteres Ende des Halterahmens (den Führungsbahnen gegenüberliegende Seite)
- 4.: Führungsbahnen
- 5.: Flachfedern
- 5.1: Aussparungen
- 6.: Entrastelemente
- 7: Führungsschrägen

- 8.: Sensorvorrichtung
- 9.: Fahrzeugscheibe
- 10.: Halteelemente
- 11.: starre Führungselemente zur seitlichen Zentrierung
- 12.: Schabenase
- 13.: Bereich einer Endposition
- 14.: Sensoranordnung
- 15.: Fahrzeugkamera
- 16.: LIDAR-Sensor
- 17.: Anschläge für Verrastmechanismus
- 18.: elastisches Element
- F: Kraft, im Wesentlichen in Führungsrichtung der Führungsbahnen

## Patentansprüche

1. Sensorvorrichtung mit einem
Halterahmen (1) zur Anordnung im Innenraum eines Fahrzeugs an einer Fahrzeugscheibe (9) ,
umfassend
- Führungsbahnen (4), die an einer Seite (2) des Halterahmens (1) ausgebildet sind, zur Aufnahme von Halteelementen (10), die an der Sensorvorrichtung (8) ausgebildet sind,
- Einrichtungen (7), die an einer den Führungsbahnen (4) gegenüberliegenden Seite (3) des Halterahmens (1) ausgebildet sind, zur Erzeugung einer mechanischen Kraft (F), die bei der Anordnung der Sensorvorrichtung (8) im Halterahmen (1) im Wesentlichen in Richtung einer Führungsrichtung der Führungsbahnen (4) auf die Sensorvorrichtung (8) wirkt, so dass die Einrichtungen (7) bei der Anordnung der Sensorvorrichtung (8) im Halterahmen (1) eine Führung der Halteelemente (10) in den Führungsbahnen (4) bewirken,
wobei die Führungsbahnen (4) derart ausgestaltet sind, dass die Halteelemente (10), bei der Anordnung der Sensorvorrichtung (8) im Halterahmen (1), derart in den Führungsbahnen (4) geführt werden, dass die Sensorvorrichtung (8) an die Fahrzeugscheibe (9) herangeführt wird.

2. Sensorvorrichtung (8) nach Anspruch 1,
**dadurch gekennzeichnet, dass**
es sich bei den Einrichtungen (7) um starr ausgebildete Führungsschrägen (7) handelt.

3. Sensorvorrichtung (8)
nach Anspruch 1,
**dadurch gekennzeichnet, dass**
es sich bei den Einrichtungen (7) um flexibel ausgebildete Führungsschrägen (7) handelt.

4. Sensorvorrichtung (8) nach einem der vorangegangenen Ansprüche, **gekennzeichnet, durch**
eine oder mehrere zusätzliche Einrichtungen (5), zur mechanischen Fixierung der Sensorvorrichtung (8) im Halterahmen (1).

5. Sensorvorrichtung (8) nach einem der vorangegangenen Ansprüche, **dadurch gekennzeichnet, dass**
die Führungsbahnen (4) mit einem im Wesentlichen S-förmigen Profil ausgestaltet sind.

6. Sensorvorrichtung (8) nach einem der vorangegangenen Ansprüche, **dadurch gekennzeichnet, dass** die Führungsbahnen (4) im Bereich einer Endposition (13) der Halteelemente (10) der Sensorvorrichtung im Wesentlichen parallel zur Fahrzeugscheibe (9) ausgerichtet sind.

7. Sensorvorrichtung (8)
nach einem der Ansprüche 4 bis 6,
**dadurch gekennzeichnet, dass**
es sich bei den zusätzlichen Einrichtungen (5) um eine oder mehrere Flachfedern (5) handelt, die derart ausgestaltet sind, dass die Flachfedern (5) mittels Verschnappen die Sensorvorrichtung (8) im Halterahmen (1) mechanisch fixieren.

8. Sensoranordnung (14), die im Innenraum eines Fahrzeugs hinter einer Fahrzeugscheibe (9) angeordnet ist, umfassend eine Sensorvorrichtung (8) nach einem der vorhergehenden Ansprüche, die mit Halteelementen (10) ausgestaltet und im Halterahmen (1) angeordnet ist.

9. Sensoranordnung (14) nach Anspruch 8,
**dadurch gekennzeichnet, dass**
die Sensorvorrichtung (8) an einer Seite (3), welche der den Führungsbahnen (4) gegenüberliegenden Seite (2) des Halterahmens (1) entspricht, mit Einrichtungen ausgestaltet ist, zur Erzeugung einer mechanischen Kraft (F), im Wesentlichen in Richtung der Führungsrichtung der Führungsbahnen (4).

10. Sensoranordnung nach Anspruch 8 oder 9,
**dadurch gekennzeichnet, dass**
es sich bei der Sensorvorrichtung (8) um eine Fahrzeugkamera handelt, mit Blickrichtung durch den Halterahmen (1) hindurch.

11. Sensoranordnung (14) nach einem der Ansprüche 8 bis 10, **dadurch gekennzeichnet, dass**
es sich bei den Halteelementen (10) um zylinderförmige Bolzen handelt, die mit Schabenasen (12) ausgestaltet sind.

## Claims

1. A sensor device having a holding frame (1) for arrangement inside a vehicle, on a vehicle window (9), comprising
- guideways (4) which are formed on a side (2) of the holding frame (1) and serve to receive holding elements (10), arranged on the sensor device (8),
- devices (7) which are formed on a side (3) of the holding frame (1) opposite the guideways (4) and serve to produce a mechanical force (F) acting on the sensor device (8) substantially in the direction of a guiding direction of the guideways (4) when the sensor device (8) is arranged in the holding frame (1), so that the devices (7) cause the holding elements (10) to be guided in the guideways (4) when the sensor device (8) is arranged in the holding frame (1),
wherein the guideways (4) are designed such that, when the sensor device (8) is arranged in the holding frame (1), the holding elements (10) are guided in the guideways (4) in such a manner that the sensor device (8) is moved towards the vehicle window (9).

2. The sensor device (8) according to Claim 1,
**characterized in that**
the devices (7) are rigid guide ramps (7).

3. The sensor device (8) according to Claim 1,
**characterized in that**
the devices (7) are flexible guide ramps (7).

4. The sensor device (8) according to any one of the preceding claims,
**characterized by**
one or more additional devices (5) for mechanically fixing the sensor device (8) in the holding frame (1).

5. The sensor device (8) according to any one of the preceding claims,
**characterized in that**
the guideways (4) are designed with a substantially S-shaped profile.

6. The sensor device (8) according to any one of the preceding claims,
**characterized in that**
the guideways (4) are aligned substantially parallel to the vehicle window (9) in the area of a final position (13) of the holding elements (10) of the sensor device.

7. The sensor device (8) according to any one of Claims 4 to 6, **characterized in that**
the additional devices (5) are one or more flat springs (5) which are designed such that the flat springs (5) mechanically fix the sensor device (8) in the holding frame (1) by means of a snap-lock mechanism.

8. The sensor arrangement (14) which is arranged inside a vehicle, behind a vehicle window (9), comprising a sensor device (8) according to any one of the preceding claims, which is designed with holding elements (10) and arranged in the holding frame (1).

9. The sensor arrangement (14) according to Claim 8, **characterized in that**
on a side (3) which corresponds to the side (2) of the holding frame (1) opposite the guideways (4), the sensor device (8) is designed with devices for producing a mechanical force (F) substantially in the direction of the guiding direction of the guideways (4).

10. The sensor arrangement (14) according to Claim 8 or 9, **characterized in that**
the sensor device (8) is a vehicle camera whose direction of view is through the holding frame (1).

11. The sensor arrangement (14) according to any one of Claims 8 to 10, **characterized in that**
the holding elements (10) are constituted by cylindrical bolts which are designed with deformation ribs (12).

## Revendications

1. Dispositif de capteur, avec un cadre de retenue (1) pour un agencement dans l'espace intérieur d'un véhicule sur une vitre de véhicule (9), comprenant
- des voies de guidage (4) qui sont formées sur un côté (2) du cadre de retenue (1) pour la réception d'éléments de retenue (10) qui sont formés sur le dispositif de capteur (8),
- des équipements (7) qui sont constitués sur un côté (3) du cadre de retenue (1) qui est opposé aux voies de guidage (4) pour la production d'une force mécanique (F) qui, dans l'agencement du dispositif de capteur (8) dans le cadre de retenue (1), agit essentiellement sur le dispositif de capteur (8) en direction d'une direction de guidage des voies de guidage (4) de telle sorte que les équipements (7), dans l'agencement du dispositif de capteur (8) dans le cadre de retenue (1), réalisent un guidage des éléments de retenue (10) dans les voies de guidage (4),
les voies de guidage (4) étant constituées de telle sorte que les éléments de retenue (10), dans l'agencement du dispositif de capteur (8) dans le cadre de retenue (1), sont guidés dans les voies de guidage (4) de telle sorte que le dispositif de capteur (8) est amené sur la vitre de véhicule (9).

2. Dispositif de capteur (8) selon la revendication 1,
**caractérisé en ce que**,
concernant les équipements (7), il s'agit de pentes de guidage (7) constituées de façon rigide.

3. Dispositif de capteur (8) selon la revendication 1,
**caractérisé en ce que**,
concernant les équipements (7), il s'agit de pentes de guidage (7) constituées de façon flexible.

4. Dispositif de capteur (8) selon l'une des revendications précédentes, **caractérisé par**
un ou plusieurs équipements (5) supplémentaires pour la fixation mécanique du dispositif de capteur (8) dans le cadre de retenue (1).

5. Dispositif de capteur (8) selon l'une des revendications précédentes,
**caractérisé en ce que**
les voies de guidage (4) sont constituées avec un profil essentiellement en forme de S.

6. Dispositif de capteur (8) selon l'une des revendications précédentes,
**caractérisé en ce que**, dans la zone d'une position d'extrémité (13) des éléments de retenue (10) du dispositif de capteur (8), les voies de guidage (4) sont orientées essentiellement parallèlement à la vitre de véhicule (9).

7. Dispositif de capteur (8) selon l'une des revendications 4 à 6,
**caractérisé en ce que**,
concernant les équipements (5) supplémentaires, il s'agit d'un ou de plusieurs ressorts à lame (5) qui sont constitués de telle sorte que les ressorts à lame (5) fixent par encliquetage le dispositif de capteur (8) dans le cadre de retenue (1).

8. Agencement de capteur (14), qui est disposé dans l'espace intérieur d'un véhicule derrière une vitre de véhicule, comprenant un dispositif de capteur (8) selon l'une des revendications précédentes, qui est constitué avec des éléments de retenue (10) et est disposé dans le cadre de retenue (1).

9. Agencement de capteur (14) selon la revendication 8,
**caractérisé en ce que**,
sur un côté (3) qui correspond au côté (2) du cadre de retenue (1) opposé aux voies de guidage (4), le dispositif de capteur (8) est constitué avec des équipements pour la production d'une force mécanique (F), essentiellement en direction de la direction de guidage des voies de guidage (4).

10. Agencement de capteur (14) selon la revendication 8 ou 9,
**caractérisé en ce que**,
concernant le dispositif de capteur (8), il s'agit d'une caméra de véhicule, avec direction de vision traversant le cadre de retenue (1).

11. Agencement de capteur (14) selon l'une des revendications 8 à 10,
**caractérisé en ce que**,
concernant les éléments de retenue (10), il s'agit de boulons de forme cylindrique qui sont constitués de becs racleurs (12).
